# EUROPEAN PATENT SPECIFICATION

(11) **EP 3 004 274 B1**
(45) Date of publication and mention of the grant of the patent: **24.04.2019**
(21) Application number: 14732758.9
(22) Date of filing: 27.05.2014
(51) Int. Cl.: C09J 103/02

(54) **ADHESIVE COMPOSITION**
KLEBSTOFFZUSAMMENSETZUNG
COMPOSITION ADHÉSIVE

(30) Priority: 28.05.2013 EP 13002747
(43) Date of publication of application: 13.04.2016
(73) Proprietor: Cargill Inc., Wayzata, MN 55391 (US)
(72) Inventor: ANDRIESSEN, Freddy Johannes Martina, NL-4561 Hulst (NL); BERGHAUS, Carsten, 45699 Herten (DE); BROKJANS, Susanne, D-47239 Duisburg (DE); SIVASLIGIL, Dogan Sahin, B-3090 Overijse (BE); STRATEMANN, Michael, 47807 Krefeld (DE)
(74) Representative: Dottridge, Cass A.C.
(86) International application number: PCT/US2014/039518
(87) International publication number: WO 2014/193799

(56) References cited:
- EP-A1- 0 409 240
- WO-A1-00/05319
- DE-A1- 3 205 210
- DE-A1- 4 119 046
- GB-A- 191 314 844
- JP-A- 2007 224 099
- US-A1- 2007 149 657

## Description

### FIELD OF THE INVENTION

The present invention relates to methods of reducing or eliminating boron use in starch-based adhesives, to boron-free or boron-reduced starch-based adhesive compositions and to additives for use therein, and to their use in the production of corrugated boards.

### BACKGROUND OF THE INVENTION

Starch-based adhesive compositions are widely used in industry. They are employed, for example, in the production of corrugated board and laminate board, for the assembly of paper bags and cardboard boxes, for carton sealing, book-binding, tube winding and bottle labeling, and as the basis for wallpaper adhesives, envelope adhesives and school glues.

Typical starch-based adhesives are composed of one or more starches (which may be either native and/or modified) and water, together with additives such as borax and caustic soda. Borax is a salt of boric acid. It is used to increase the viscosity of the adhesive and give it its required structure. It increases the adhesive's wet tack, and improves its film-forming and water-holding properties. For these reasons, it has for a long time been considered an essential component of starch-based adhesives.

However, since 2008, a number of boron-based compounds, including boric acid, have been classified as toxic for reproduction. In June 2010, these compounds were placed on the Substances of Very High Concern (SVHC) candidate list. The SVHC candidate list is part of the EU Regulations on the Registration, Evaluation, Authorization and Restriction of Chemicals (REACH). Under these regulations, the presence of SVHC-classified compounds in compositions at levels of 0.1% by weight or above must be communicated (e.g. using Material Safety Data Sheets). What's more, there is a risk that the use of these compounds in certain applications (such as for the preparation of adhesives) may soon need a special authorization.

As such, there is a clear need to develop an alternative to borax which would allow for the production of boron-reduced or even boron-free adhesives - especially where the adhesives are intended for use with food packaging materials. The present invention provides such an alternative.

### STATEMENTS OF THE INVENTION

According to one aspect of the present invention, there is provided a starch-based adhesive composition according to claim 1.

Disclosed herein is also the use of one or more polyphosphates and/or one or more hydrocolloids to replace borax in adhesive compositions.

Disclosed herein is furthermore a process for preparing an adhesive composition comprising mixing one or more polyphosphates and/or one or more hydrocolloids with at least one starch or with a slurry of at least one starch.

According to another aspect of the present invention there is provided a paper product produced with an adhesive composition as defined above.

### FIGURES

FIG 1 shows the RVA (Rapid Visco Analyser) profiles of Adhesives A (standard ready-mix adhesive, with borax), B (ready-mix adhesive of the invention, without borax), and E (ready-mix adhesive of the invention, without borax).
FIG 2 shows the standard n-Brabender (Viscograph E) profiles of Adhesives C (standard Stein-Hall adhesive, with borax) and D (Stein-Hall adhesive of the invention, without borax).

### DETAILED DESCRIPTION OF THE INVENTION

The present invention provides additives for starch-based adhesive compositions comprising a polyphosphate and/or a hydrocolloid. Unless otherwise made clear by context, the term "a" as used herein will mean "at least one".

### ADDITIVE

The term additive as used herein refers to a composition, as defined in claim 1 either dry or aqueous, which is added to another composition to alter or improve its quality and/or functionality. In the present case, the additive is intended for use in adhesive compositions (such as corrugating adhesives) to replace borax or other boron-based compounds.

### POLYPHOSPHATE

The additive composition of the present invention comprises one or more polyphosphates. A polyphosphate is a salt or ester of polymeric oxyanions formed from tetrahedral PO₄ (phosphate) structural units linked together by shared oxygen atoms. They may have a linear chain structure or a cyclic ring structure. Examples of polyphosphates suitable for use in the present invention include potassium polyphosphates, sodium polyphosphates and mixtures thereof. Preferably, the polyphosphates will be selected from sodium polyphosphates. More preferably they will be selected from sodium trimetaphosphate (STMP), sodium tripolyphosphate (STPP) and mixtures thereof. In one aspect, the additive will comprise a mixture of STMP and STPP.

The amount of polyphosphate to be used will be calculated based on the total dry substance, by weight, of the adhesive composition. In the present case, the adhesive composition will preferably comprise up to 2% of the one or more polyphosphates by weight, based on the total dry weight of the adhesive composition. More preferably, it will comprise 0.05 to 2% of the one or more polyphosphates, more preferably 0.05-1.5%, more preferably 0,05-1%, more preferably 0.05-0.5%, more preferably 0.05-0.25 by weight.

In addition to, or instead of, the one or more polyphosphates, the additive composition of the present invention may comprise one or more hydrocolloids, comprises a hydrocolloid selected from the group consisting of: xanthan gum, locust bean gum and mixtures thereof.

### HYDROCOLLOID

As used herein, the term "hydrocolloid" will refer to a hydrocolloid selected from the group consisting of xanthan gum, locust bean gum and mixtures thereof.

The amount of hydrocolloid to be used will be calculated based on the total dry substance, by weight, of the adhesive composition. In the present case, the adhesive composition will preferably comprise up to 2% by weight of the one or more hydrocolloids, based on total dry weight of the adhesive composition. More preferably, it will comprise 0.05 to 2% of the one or more hydrocolloids, more preferably 0.1- 1.5%, more preferably 0.5-1.5%.

The one or more hydrocolloids and one or more polyphosphates will preferably account for no more than 3%, more preferably no more than 2%, by weight of the adhesive composition on a dry weight basis. In any event, the adhesive composition will preferably comprise the one or more polyphosphates and/or one or more hydrocolloids in an amount sufficient to render the use of borax redundant.

### FILLER

Advantageously, the composition of the present invention may also comprise a filler. The filler may be selected from any available source but, for environmental and economic reasons, will preferably be selected from the group consisting of mineral based fillers, such as calcium carbonate, aluminum hydroxide, pigments, clays, kaolins, and mixtures thereof. Preferably, the filler will be calcium carbonate. The filler may be included in an amount of up to 25% by weight based on total dry weight of the adhesive composition. Preferably, it will be included in an amount of up to 20%, more preferably up to 15%, more preferably up to 10%. For example, the composition may comprise from 1 to 10% by weight filler, based on total dry weight, preferably from 2 to 7% by weight. In one aspect of the invention, the adhesive composition will comprise approximately 5% calcium carbonate by weight.

Thus, in various aspects of the present invention, the additive may comprise a polyphosphate or a hydrocolloid, a polyphosphate and a hydrocolloid, a polyphosphate and a filler, a hydrocolloid and a filler, or a polyphosphate, a hydrocolloid and a filler. For example, the additive may comprise STMP, locust bean gum, and calcium carbonate.

### OPTIONAL ADDITIVES

The additive and/or adhesive compositions of the present invention may also include one or more further optional ingredients. By way of example, these may include antifoaming agents, wet-strength agents, pigments, preservatives or biocides and synthetic or natural thickeners. Preferably, the adhesive composition will comprise an alkali. Examples of suitable alkalis include sodium carbonate, calcium hydroxide, sodium hydroxide and mixtures thereof (for example, mixtures of sodium carbonate and calcium hydroxide). Preferably, the alkali will be sodium hydroxide. The composition will preferably comprise 0.1-10% alkali by weight, on a dry weight basis. More preferably, it will comprise 0.2-7% alkali by weight; more preferably 0.5-5%; more preferably 0.5-3% alkali by weight. The additive composition may also comprise starch. The starch may, for instance, be used to make dosing of the additive easier by increasing overall volume.

### ADHESIVE

The term adhesive composition as used herein may refer to both dry and aqueous adhesive compositions. A dry composition (e.g. of the ready-mix or "one bag mix" type) will comprise some or all of the dry ingredients required to produce a functional adhesive, but will not comprise water (or other liquids) in an amount sufficient to dissolve, disperse or suspend the dry ingredients. An aqueous composition will comprise some or all of the dry ingredients together with some or all of the water (or other liquid) required to produce a functional adhesive (i.e. an adhesive which is capable of causing adhesion between two surfaces of a pre-determined substrate). These functional aqueous adhesive compositions will preferably comprise up to 55% dry substance by weight. More preferably they will comprise 15-50% dry substance by weight, more preferably 20-45%, more preferably 20-40%, more preferably 20-35%.

The adhesive composition of the present invention may be any starch-based adhesive. A starch-based adhesive is one in which one of the primary ingredients (on a dry weight basis) is starch. Preferably, it will be a corrugating adhesive. Various types of starch-based corrugating adhesives exist. These include, for instance, Stein Hall adhesives, Minocar adhesives, No-Carrier adhesives and ready-mix (or so-called "one bag mix") adhesives.

Stein Hall type adhesives comprise one or more primary (or "carrier") starch(es) and one or more secondary starch(es). The primary starch is gelatinized - typically by heating in the presence of an alkali - to produce a relatively high viscosity paste within which, after addition of so-called secondary water, the (non-gelatinized) secondary starch can then be dispersed. Minocar type adhesives also comprise one or more primary and secondary starches. Here, however, viscosity is developed through the gradual addition of alkali to the primary starch. Once the desired viscosity is reached, the secondary starch is then added (after possible addition of secondary water). No-Carrier type adhesives, as their name suggests, do not have distinct primary and secondary starches. Instead, the entire starch content is partially gelatinized to achieve a desired viscosity. Ready-mix type adhesives are produced from a single dry ingredient pre-mix which typically comprises one or more pregelatinized or cold water soluble primary starches and one or more non-pregefatinized (and non-cold water soluble) secondary starches such that, upon addition to water, only the primary starch gelatinizes. A skilled person will be familiar with these and other types of corrugating adhesives and their methods of manufacture.

The adhesive composition of the present invention will preferably be a Stein Hall or a ready-mix adhesive composition. By way of example, a Stein Hall adhesive composition according to the present invention may comprise a primary and a secondary starch, together with one or more polyphosphates (such as a blend of STMP and STPP). A ready-mix adhesive composition of the present invention, by contrast, may comprise a cold water soluble starch, a non-cold water soluble starch, a polyphosphate such as STMP and a hydrocolloid such as locust bean gum.

Adhesive compositions of the present invention may comprise up to 30% of the additive composition by weight, on a dry weight basis - depending, of course, on the nature of the additive composition. For instance, if the additive composition comprises filler, it will be used in greater quantities than if it consists solely of polyphosphate and/or hydrocolloid. In that case, the adhesive composition may comprise as little as 0.05% of the additive by weight, on a dry weight basis. Thus, by way of example only, the additive compositions may be used in amounts of 0.1-20%, preferably 0.5-15%, more preferably 1-10%, more preferably 1-5% by weight.

### STARCH

The term starch, as used herein, may refer to native starches, starch derivatives, and mixtures thereof. Starch derivatives include, for example, chemically modified, thermally modified and enzymatically modified starches. They also include depolymerized starch molecules such as dextrins, maltodextrins and pyrodextrins. The starch may be from any source including, for instance, waxy or dent corn, wheat, tapioca, potato, rice or pea. Preferably, it will be selected from corn starch, wheat starch, corn starch derivatives, wheat starch derivatives or mixtures of two or more thereof.

For adhesives compositions of the invention which comprise both a primary starch and a secondary starch, these two starches may be the same or they may different. As defined above, they may also be selected from native starches and/or starch derivatives from any source. For example, the composition of the present invention may comprise a pregelatinized primary starch and native secondary starch. Alternatively, the primary and secondary starches may both be native starches (e.g. native corn starch) but their functionality will be differentiated during preparation of the adhesive composition (e.g. by preparing the carrier, before addition of the secondary starch).

The adhesive composition will preferably comprise at least 50% starch by weight, on a dry weight basis. More preferably, it will comprise 50-99% starch by weight. More preferably, it will comprise 75-98% starch by weight.

### BORAX

As mentioned above, starch based adhesives have typically included borax, amongst others, to increase viscosity and wet tack. It has surprisingly been found that polyphosphates can be used to replace borax, either partially or completely. Thus, the adhesive compositions of the present invention will preferably be substantially free of borax and other boron based compounds.

By "substantially free" it will be understood that the adhesive compositions of the invention will not comprise borax - or other boron based compounds - in an amount that would require the final composition to be labeled, in accordance with the EU's REACH regulations, as comprising more than 0.1% by weight (based on total weight) of any compounds on the SVHC candidate list. These include, for example, tetraboron disodium heptaoxide, boric acid and disodium tetraborate. Thus, the compositions of the invention will preferably be substantially free of borax, tetraboron disodium heptaoxide, boric acid, disodium tetraborate, sodium borate, sodium tetraborate, sodium metaborate salt, borax decahydrate, diboron trioxide and lead bis(tetrafluoroborate). More preferably, they will be substantially free of these compounds (i.e. no such compounds will expressly be added to the compositions of the invention). The use of one or more polyphosphates and/or one or more hydrocolloids to replace borax in adhesive compositions (i.e. to mimic or replicate its functionality) is also part of the present invention.

### METHOD OF PREPARATION

Methods of preparing adhesive compositions with a reduced borax content (and which are preferably borax free) are also part of the present disclosure These methods will mirror methods of preparing starch-based adhesives known in the art except that the additive composition described herein will be used instead of some or all of the borax normally used.

Thus, a method of the present disclosure will typically comprise the step of mixing one or more starch(es) or a starch slurry formed from one or more starch(es) with one or more polyphosphates and one or more hydrocolloids, together with any optional ingredients such as fillers or alkali. The polyphosphate(s), hydrocolloid(s), filler(s), and any other additive ingredients may be added together or separately to the adhesive composition. They may be added to a dry or to an aqueous adhesive composition. Alternatively, part of the additive ingredients may be added to a dry adhesive composition, prior to the addition of water, whilst another part is added after the addition of water.

In the case of a ready-mix adhesive composition, for example, the one or more polyphosphates and one or more hydrocolloids, together with any filler, would be mixed with a dry blend of pregelatinised (or cold water soluble) and non-pregelatinised (or non-cold water soluble) starches to form a dry pre-mix. The pre-mix could then be added to water to form an aqueous adhesive composition. Alternatively, for the preparation of a Stein Hall adhesive, the one or more polyphosphates and one or more hydrocolloids, together with any filler, could be added before, during or after gelatinization of the primary starch but before the addition of the secondary starch, or they could be added with the secondary starch, or they could be added after the secondary starch. The various possible permutations will be apparent to a person skilled in the art. The addition of any further ingredients as described above, e.g. alkali, may be carried out as for any standard adhesive composition.

Adhesive compositions obtainable by the above methods, together with their use and products produced therewith, are also part of the present disclosure. In particular, the present invention provides paper products produced with low-borax or borax-free adhesive compositions. These may include, for instance, corrugated board, laminate board, paper bags, and paper tubes. Preferably, the present disclosure provides corrugated board produced with such an adhesive.

Advantageously, products produced with the adhesive composition of the present invention can be considered food safe by virtue of the near complete or complete absence of borax. As such, these products will be particularly suitable for use in the manufacture of food and/or beverage packaging materials. Such materials are also part of the present disclosure.

The present invention will now be further illustrated by means of the following, non-limiting examples.

### EXAMPLES

### Example 1 - Preparation of Pre-Mixes

The following pre-mixes were prepared for use in lieu of borax.

### • Preparation of Pre-Mix 1 (PM1)

A dry mix of 39% C*GUM 03436 (from Cargill), 55% Viscogum FA (also from Cargill) and 6% sodium trimetaphosphate (STMP) was prepared.

### • Preparation of Pre-Mix 2 (PM2)

A dry mix of 93% C*GUM 03436, 2% STMP, and 5% sodium tripolyphosphate (STPP) was prepared.

### • Preparation of Pre-Mix 3 (PM3)

A dry mix of 66.6% C*GUM 03436, 5.6% STMP, 27.8% calcium carbonate was prepared.

### Example 2 - Preparation of Adhesives

The following adhesives were prepared for testing.

### • Preparation of a standard ready-mix adhesive (Adhesive A)

A standard ready-mix adhesive was prepared by mixing 200 parts C*GUM 03627 (from Cargill) including 3.6 parts borax, with 600 parts water. The ingredients were mixed for 30 minutes at 30°C and 1500 rpm.

### • Preparation of a borax-free ready-mix adhesive of the invention (Adhesive B)

In a first stage, a dry mix of 82% C*GUM 03436, 11% C*Plus 12015 (from Cargill), 3% sodium carbonate, 2.2% calcium hydroxide, and 1.8% of **PM1** (all percentage expressed by weight) was prepared. The adhesive was then produced by mixing 200 parts of the above dry mix with 600 parts water. The ingredients were mixed for 30 minutes at 30°C and 1500 rpm.

### • Preparation of a standard Stein-Hall adhesive (Adhesive C)

A standard Stein-Hall adhesive was prepared by mixing 350 parts water, 34 parts C*GUM 03436 and 7 parts sodium hydroxide for 20 minutes at 40°C and 1000 rpm. To this mix, 550 parts water, 256 parts C*GUM 03436 and 5 parts borax were then added and stirred for 20 minutes at 30°C and 1500 rpm.

### • Preparation of a borax-free Stein-Hall adhesive of the invention (Adhesive D)

A borax-free Stein-Hall adhesive was prepared by mixing 350 parts water, 48 parts C*GUM 03436 and 7.5 parts sodium hydroxide for 20 minutes at 40°C and 1000 rpm. To this mix, 550 parts water, 247 parts C*GUM 03436 and 5 parts **PM2** were then added and stirred for 20 minutes at 30°C and 1500 rpm.

### • Preparation of a borax-free ready-mix adhesive of the invention (Adhesive E)

In a first stage, a dry mix of 79.7% C*GUM 03436, 14.0% C*Plus 12015 (from Cargill), 2.6% sodium carbonate, 1.9% calcium hydroxide, and 1.8% of **PM3** (all percentage expressed by weight) was prepared. The adhesive was then produced by mixing 250 parts of the above dry mix with 630 parts water. The ingredients were mixed for 30 minutes at 30°C and 1500 rpm.

### Example 3 - Evaluation of the Adhesives

Each of the above adhesives was tested for Stein Hall viscosity and gel point.

### • Stein Hall Viscosity

Stein Hall viscosity is defined as the number of seconds required for a set volume (100cc) of adhesive to flow through the viscometer (Stein Hall cup) orifice. The set volume is defined by a top pin and a lower pin positioned within the cup. Adhesive is filled into the cup to overflowing (to eliminate foam and ensure a sharp layer at the top), blocking the orifice at the bottom with a finger. With the cup maintained in a vertical position, the orifice is then unblocked and, as the adhesive passes the top pin, a stopwatch is started. Timing is stopped when the adhesive passes the top of the lower pin.

The following measurements were recorded for the above adhesives (measurements performed with adhesives at 30°C):
Adhesive A: viscosity 65sec Stein-Hall
Adhesive B: viscosity 70sec Stein-Hall
Adhesive C: viscosity 55sec Stein-Hall
Adhesive D: viscosity 55sec Stein-Hall
Adhesive E: viscosity 75sec Stein Hall

### • Gel Point

Gel point is the temperature at which the adhesive starts to solidify (allowing it to bond paper). It is measured by heading a sample of the adhesive in a controlled manner and measuring the temperature at which a sharp increase in viscosity is observed.

The following measurements were recorded for the above adhesives:
Adhesive A: 55°C get point
Adhesive B: 54°C get point
Adhesive C: 56°C gel point
Adhesive D: 55°C gel point
Adhesive E: 54°C gel point

As can be seen from these results, the absence of borax in the adhesives of the invention does not have a detrimental impact on Stein Hall viscosity or gel point. They are indeed substantially the same as those measured for borax-containing adhesives.

### Example 4 - Preparation and Testing of Papers

### • Preparation of corrugated board

Open C-flute corrugated board comprising of a 200g/m² KL as single facer liner + 200g/m² KL as the medium was bonded with 135g/m² KL as the double backer liner and a 0.1 mm film of adhesive, using each of the adhesives prepared above (KL= Kraft Liner).

### • Pin Adhesion Test (PAT)

Average PAT values were measured according to Tappi method 821 om-87.

The following results were recorded:
Adhesive A: 600 N/m
Adhesive B: 590 N/m
Adhesive C: 580 N/m
Adhesive D: 610 N/m
Adhesive E: 680 N/m

As can be seen from these results, the borax free adhesives of the present invention performed as well as, or indeed better than, their standard borax-containing equivalents.

### • Viscosity Development

The viscosity profiles of Adhesives A, B and E were determined using a Rapid Visco Analyser (following manufacturer's instructions) - with 1:2 diluted adhesives. The viscosity profiles of Adhesives C and D were determined using a Brabender Viscograph E viscometer (again, following the manufacturer's instructions).

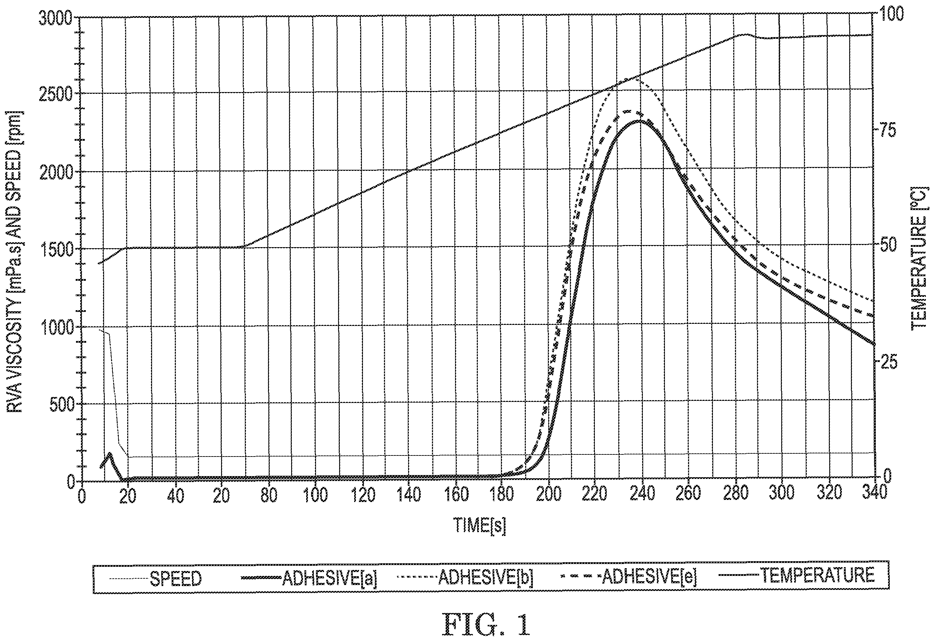

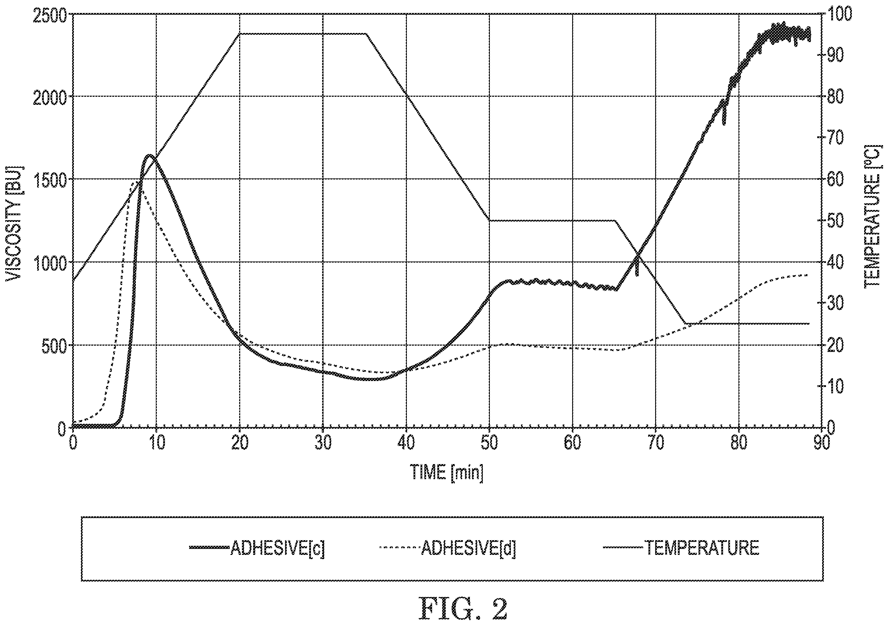

Results are shown in Figures 1 and 2 and demonstrate that, at the critical part of the gluing process, the borax-free adhesives of the present invention have very similar profiles to standard borax-containing adhesives.

## Claims

1. An adhesive composition comprising a starch and up to 30% by weight on a dry weight basis of an additive composition, the additive composition comprising a polyphosphate and a hydrocolloid selected from the group consisting of: xanthan gum, locust bean gum and mixtures thereof.

2. The adhesive composition according to claim 1, **characterized in that** the polyphosphate is a sodium polyphosphate.

3. The adhesive composition according to claim 2, **characterized in that** the polyphosphate is selected from the group consisting of: sodium trimetaphosphate (STMP), sodium tripolyphosphate (STPP) and mixtures thereof.

4. The adhesive composition according to any one of the preceding claims, further comprising a filler.

5. The adhesive composition according to claim 4, **characterized in that** the filler is selected from the group consisting of: calcium carbonate, a pigment, a clay, and mixtures thereof.

6. The adhesive composition according to any one of the preceding claims, **characterized in that** it comprises up to 2% by weight, on a dry weight basis, of the polyphosphate.

7. The adhesive composition, according to any one of the preceding claims, **characterized in that** it comprises up to 2% by weight, on a dry weight basis, of the hydrocolloid.

8. The adhesive composition according to any one of the preceding claims, **characterized in that** it comprises up to 25% by weight, on a dry weight basis, of the filler.

9. An adhesive composition according to any one of the preceding claims, **characterized in that** it is substantially free of borax and/or other boron-based compounds.

10. A paper product produced with an adhesive composition according to any one of preceding claims

## Patentansprüche

1. Klebstoffzusammensetzung, umfassend eine Stärke und bis zu 30 Gew.-%, bezogen auf das Trockengewicht, einer Additivzusammensetzung, wobei die Additivzusammensetzung ein Polyphosphat und ein Hydrokolloid, ausgewählt aus der Gruppe, bestehend aus: Xanthangummi, Johannisbrotgummi und Gemischen davon, umfasst.

2. Klebstoffzusammensetzung nach Anspruch 1, **dadurch gekennzeichnet, dass** das Polyphosphat ein Natriumpolyphosphat ist.

3. Klebstoffzusammensetzung nach Anspruch 2, **dadurch gekennzeichnet, dass** das Polyphosphat ausgewählt ist aus der Gruppe, bestehend aus: Natriumtrimetaphosphat (STMP), Natriumtripolyphosphat (STPP) und Gemischen davon.

4. Klebstoffzusammensetzung nach einem der vorstehenden Ansprüche, die weiter einen Füllstoff umfasst.

5. Klebstoffzusammensetzung nach Anspruch 4, **dadurch gekennzeichnet, dass** der Füllstoff ausgewählt ist aus der Gruppe, bestehend aus: Calciumcarbonat, einem Pigment, einem Ton und Gemischen davon.

6. Klebstoffzusammensetzung nach einem der vorstehenden Ansprüche, **dadurch gekennzeichnet, dass** sie bis zu 2 Gew.-%, bezogen auf das Trockengewicht, des Polyphosphats umfasst.

7. Klebstoffzusammensetzung nach einem der vorstehenden Ansprüche, **dadurch gekennzeichnet, dass** sie bis zu 2 Gew.-%, bezogen auf das Trockengewicht, des Hydrokolloids umfasst.

8. Klebstoffzusammensetzung nach einem der vorstehenden Ansprüche, **dadurch gekennzeichnet, dass** sie bis zu 25 Gew.-%, bezogen auf das Trockengewicht, des Füllstoffs umfasst.

9. Klebstoffzusammensetzung nach einem der vorstehenden Ansprüche, **dadurch gekennzeichnet, dass** sie im Wesentlichen von Borax und/oder anderen Verbindungen auf Bor-Basis frei ist.

10. Papierprodukt, hergestellt mit einer Klebstoffzusammensetzung nach einem der vorstehenden Ansprüche.

## Revendications

1. Composition adhésive comprenant un amidon et jusqu'à 30% en poids sur une base de poids sec d'une composition d'additif, la composition d'additif comprenant un polyphosphate et un hydrocolloïde choisi dans le groupe constitué de : gomme xanthane, gomme de caroube et leurs mélanges.

2. Composition adhésive selon la revendication 1, **caractérisée en ce que** le polyphosphate est un polyphosphate de sodium.

3. Composition adhésive selon la revendication 2, **caractérisée en ce que** le polyphosphate est choisi dans le groupe constitué de : trimétaphosphate de sodium (STMP), tripolyphosphate de sodium (STPP) et leurs mélanges.

4. Composition adhésive selon l'une quelconque des revendications précédentes, comprenant en outre une charge.

5. Composition adhésive selon la revendication 4, **caractérisée en ce que** la charge est choisie dans le groupe constitué de : carbonate de calcium, un pigment, une argile, et leurs mélanges.

6. Composition adhésive selon l'une quelconque des revendications précédentes, **caractérisée en ce qu'**elle comprend jusqu'à 2 % en poids, sur une base de poids sec, du polyphosphate.

7. Composition adhésive, selon l'une quelconque des revendications précédentes, **caractérisée en ce qu'**elle comprend jusqu'à 2 % en poids, sur une base de poids sec, de l'hydrocolloïde.

8. Composition adhésive selon l'une quelconque des revendications précédentes, **caractérisée en ce qu'**elle comprend jusqu'à 25 % en poids, sur une base de poids sec, de la charge.

9. Composition adhésive selon l'une quelconque des revendications précédentes, **caractérisée en ce qu'**elle est sensiblement exempte de borax et/ou d'autres composés à base de bore.

10. Produit de papier produit avec une composition adhésive selon l'une quelconque des revendications précédentes.
